# EUROPEAN PATENT APPLICATION

(11) **EP 1 865 470 A1**
(43) Date of publication of application: **12.12.2007**
(21) Application number: 06388041.3
(22) Date of filing: 06.06.2006
(51) Int. Cl.: G07F 7/10, G07F 19/00, A45C 11/18

(54) **Cardholder system with improved security functions and corresponding methods**

(71) Applicant: CardSafe System, 8560 Kolind (DK)
(72) Inventor: Pedersen, Soren, Degnbol, 7870 Roslev (DK); Prang-Andersen, Finn, 8560 Kolind (DK); Lovgreen, Sti, 8000 Arhus C (DK); Voss, Frands, Wulff, 6400 Sonderborg (DK); Andersen, Niels Lervad, 6440 Augustenborg (DK)
(74) Representative: Nielsen, Henrik Sten

(57) **Abstract**

The present invention relates to a cardholder system for holding credit cards or other electronic cards for use in connection with various transactions where the cardholder is provided with means for protection against card fraud. Specifically the cardholder system according to the invention comprises means for providing access to a card in the cardholder or to required information stored on such a card for instance in a magnetic stripe or a chip on the card only upon entry of an individual cardholder code or alternative data uniquely identifying the owner of the cardholder system and the card or cards contained herein. Upon reception of this code or data, information required for performing a Card Not Present (CNP) transaction stored on a card in the cardholder will be displayed on a display on the cardholder and the card may be removed from the cardholder. The cardholder according to the invention may furthermore be used to carry out contactless payment transactions directly from the cardholder system, i.e. without removing a card from the cardholder. To accomplish this the cardholder according to the invention is provided with RFID-tag or transponder means for communication with a BLINK terminal and the data necessary to perform a contactless payment transaction are transferred from a card in the cardholder to these means on acceptance of the above mentioned cardholder code or data.

## Description

### TECHNICAL FIELD

The present invention relates generally to a cardholder system for credit cards and/or "non"-payment cards etc. and more specifically to such systems comprising security functions for protection against methods of payment card fraud. The invention relates furthermore to methods for performing secure transactions using data stored on such cards.

### BACKGROUND OF THE INVENTION

Various cardholders for instance for payment or credit cards have been described in the literature. Reference is thus made to GB 2 236 000 A disclosing a theft or loss alarm system comprising a credit card shaped holder provided with a receiver, which receives a radio signal transmitted from a transmitter worn by the user. This signal is of limited range so that the receiver will loose contact with the transmitter if the holder is moved a certain distance away from the transmitter, which would be the case, if the holder is incidentally dropped and not picked up by the user. The loss of radio reception causes an alarm to sound in the holder. Furthermore US 5,914,657 discloses a wallet capable of preventing loss of cards kept therein, the wallet comprising slots for holding credit cards, the slots being provided with sensor means and electrical circuits by means of which a buzzer will be activated if a card has not been returned to the slot after a certain period of time. Furthermore international patent application publication number WO 01/55977 discloses a cardholder system provided with security functions comprising invalidation means for destroying information stored on the card in the cardholder if the card is removed from the cardholder without authorisation.

### SUMMARY OF THE INVENTION

It is an object of the present invention to provide a cardholder system and corresponding methods offering protection against all main methods of payment card fraud without the necessity of any major changes to the production of payment cards or their operational systems.

Specifically, although not exclusively, it is an object of the present invention to provide a cardholder system and methods for secure "Card Not Present (CNP)" and "contactless payment" transactions.

These and other objects are attained with a cardholder system according to claim 1 comprising a cardholder provided with means for entering a personal identification code into the cardholder and means for displaying information stored on at least one card contained in the cardholder once said personal identification code has been accepted by the cardholder system. A cardholder which basically could be used in specific embodiments of the present invention would be the one described in the applicant's own prior international patent application publication number WO 01/55977, but it is understood that the invention is not limited to the use of this specific cardholder.

The overall principle of the cardholder system according to the present invention is that a card contained in the cardholder or the information contained on such a card may only be used for carrying out transactions once a personal authorisation code has been provided to the cardholder. On entering this code, data necessary for carrying out card transactions are either transferred from storage means on the card (in case of a chip or smart card, where such data are stored on a chip embedded in the card) to storage/processing means in the cardholder according to the invention and shown on a display on the cardholder or read directly from storage means on the card and displayed on the cardholder display. Alternatively said data are transferred into the storage means in the cardholder on insertion of the card into the cardholder, and subsequently - on entering the correct personal authorisation code - displayed on the cardholder display. This alternative must be chosen in case said data are stored on a magnetic stripe on the card, as this data transfer will require relative movement between the cardholder and the card in order to read the data stored on the magnetic stripe on the card. Said authorisation code could be a personal identification code that could be entered on a keyboard or touch screen on the cardholder. Alternatively personal authorisation could be provided by the fingerprint of the owner of the cardholder and the cards contained in the cardholder, and such data could be provided to the cardholder by a fingerprint sensor or scanner as described in the above mentioned international patent application publication number WO 01/55977. Other authorisation means not requiring entering of a numeric or alphanumeric code could however also be envisaged, as for instance described in the following detailed description of embodiments of the invention.

For so-called "Card Not Present (CNP)" transactions, i.e. for instance transactions carried out via the Internet, a mobile phone or a FAX machine, a code comprising a number of digits is required and this will traditionally be provided on the card. One such code is the Card Security Code (CSC) or Card Verification Code (CVC) normally provided on the back of a payment card in or adjacent to the field on which the card owner writes his signature. This numeric code will in the following be referred to as Card Security Code (CSC), but both of the above codes and alternative digit codes serving the same purpose are in the present specification included herein. The CSC normally comprises three digits. According to the present invention this code is removed from the card, such that it may not be read by for instance an unauthorised person, and instead stored in storage means on the card, such as the magnetic stripe on a traditional payment card or a chip in a chip card or smart card. The code is according to the invention as mentioned above transferred to storage means in the cardholder or may be read from a card present in the cardholder and on entering the above mentioned personal authorisation data the Card Security Code (CSC) will be displayed on display means provided on the cardholder. Thus only after entering the personal authorisation data in the cardholder the CSC may be used for carrying out CNP transactions or other transactions requiring data from the card(s) contained in the cardholder.

The overall security concept of the cardholder system according to the invention is that in order to be able to use the payment card for a transaction - no matter whether this transaction is carried out as a traditional payment card transaction, where the card is inserted into a card reader for reading information stored on the card or as a "Card Not Present (CNP)" transaction for instance via the Internet or as a contactless payment transaction as described in the following - the person carrying out the transaction must possess both the payment card itself, the cardholder according to the invention and a personal code for the cardholder. The personal code could be the PIN code of a specific card contained in the cardholder, where the PIN code will be stored in the chip of a chip card or in the magnetic stripe in a card not provided with a chip. It would according to the invention however also be possible to use a dedicated cardholder code, for instance chosen by the user, and not related to the PIN code of any specific card for providing authorisation of use of the cardholder and information stored herein for various transactions. Such dedicated cardholder codes could be purely numeric, as a PIN code, but could also for that matter comprise strings of any alphanumeric characters that could easily be memorised by the user. Alternatively, authorisation data (fingerprint etc.) could be used as described further in the following.

Three different forms of basic transactions may be carried out according to the present invention:
(1) Traditional payment, currency retrieval etc. by removal of a card from the cardholder and insertion of the card in a card reader.
(2) "Card Not Present (CNP)" or e-commerce (Homebanking) transactions using information derivable from the card, but not actually shown on the card to carry out the transaction for example via the Internet, telephone, FAX, etc.
(3) "Contactless payment" by radio frequency identification technology (RFID - radio frequency identification). Information is transmitted using radio frequency identification technology from the cardholder system to a dedicated contactless payment receiver/terminal ("BLINK receiver"), not from the card (i.e. a chip on the card) itself.

The above and other objects may according to the invention be attained by a cardholder system as defined by independent claim 1, which comprises:
(a) At least one receptacle for receiving and holding cards, where the cards may either be of the type only comprising magnetic information storage means in the form of a magnetic stripe or of the form comprising an electronic chip with stored information (a chip card or smart card).
(b) User interface means for entering personal identification data into the cardholder. These user interface means could for instance be a keyboard or touch screen, but it could also be more sophisticated devices, such as a fingerprint sensor.
(c) Means for storing personal identification data in the cardholder. Such data are used for authorisation of use of the cards in the cardholder or of the information contained on these cards to carry out various transactions, such as traditional payment or currency retrieval operations, Card Not Present (CNP) transactions or contactless payment transactions.
(d) Means for comparing said entered personal identification data with the personal identification data stored in the cardholder;
(e) Means for providing access to a card in the cardholder (i.e. for opening the cardholder, such that a card may be removed from the cardholder without invalidation of the card or otherwise rendering the card unsuited for carrying out transactions) if said entered and stored personal identification data are similar;
(f) Means for reading information present on a card, when the card is being inserted into the cardholder or when the card is present in the cardholder, whereby for instance the Card Security Code (CSC) or Card Verification Code (CVC) may be transferred from storage means (magnetic stripe, a chip) on the card to storage means in the cardholder. Said means could include means for reading a dynamic password used for instance for e-commerce.
(g) Optionally storage means in the cardholder for storing said information provided from the card.
(h) Display means visibly provided on the cardholder for displaying at least a portion of said information, such as the Card Security Code (CSC).

According to specific embodiments of the invention the cardholder may furthermore be provided with the invalidation means and other means described in the above-mentioned international patent application WO 01/55977. Furthermore the cardholder according to the invention may comprise alternative invalidation means to those described in international patent application publication number WO 01/55977, such means being described in the detailed description of the present invention.

The present invention furthermore relates to methods of performing transactions using electronic cards and/or the information contained on such cards. Specifically the present invention relates to the methods set forth in claim 12, i.e. relating to direct use of a card in a transaction or to a "Card Not Present" (CNP) transaction for instance performed via the Internet, telephone etc. The present invention furthermore relates to a method of performing transactions using the information contained on electronic cards as set forth in claim 13, i.e. relating to the use of card information to carry out contactless payment transactions ("BLINK") without removal of the card from the cardholder.

Thus the present invention as defined in claim 12 furthermore relates to a method for performing transactions, said method comprising placement of an electronic card (credit card, chip card, smart card, etc.) in a cardholder according to the present invention provided with means for reading information stored on said card, said method comprising the following steps:
(a) entering a personal identification code (PIN code, dedicated cardholder code, etc.) into said cardholder or providing personal identification data to the cardholder by other means, such as a fingerprint sensor;
(b) the cardholder on reception of said personal identification code or data displaying a Card Security Code (CSC) and/or unlocking the cardholder, such that at least one card may be removed from the cardholder; and
(c) either performing a transaction by means of the card itself (for instance by insertion of the card in a card reader) or performing a transaction using data obtainable from the card itself together with said Card Security Code (CSC) displayed on the cardholder.

The present invention as defined in claim 13 furthermore relates to a method for performing transactions, said method comprising placement of an electronic card (credit card, chip card, smart card etc.) in a cardholder according to the present invention provided with means for reading information stored on said card, said method comprising the following steps:
(a) entering a personal identification code (PIN code, dedicated cardholder code, etc.) into said cardholder or providing personal identification data to the cardholder by other means, such as a fingerprint sensor;
(a) upon acceptance of said personal identification code transfer of card data relating to a card contained in the cardholder to radio frequency identification (RFID) transmitting means or a RFID-tag provided in the cardholder; and
(b) performing a contactless payment transaction (BLINK) using the radio frequency identification (RFID) transmitting means or RFID-tag provided in the cardholder.

According to the invention the RFID-tag or transponder traditionally present on cards for contactless payment is thus removed from the card and replaced by corresponding means in the cardholder itself, whereby a contactless payment transaction may only be carried out after entering of the personal identification code or data into the cardholder system. This largely increases the protection against unauthorised contactless transactions being carried out using a payment card.

A number of functions not described above may also be performed by the cardholder according to the invention. Such functions and features relating to the cardholder according to the present invention and the corresponding methods will be described in the following

### detailed description of the invention.

### BRIEF DESCRIPTION OF THE DRAWINGS

The invention will be better understood with reference to the following detailed description of an embodiment of the invention in conjunction with the drawing, where:
Figure 1 shows a cardholder according to an embodiment of the invention;
Figure 2 shows a summary of functions which may be performed by the cardholder system according to the invention;
Figure 3 shows further details of some of the main security functions according to the invention;
Figure 4 shows a functional diagram of an embodiment of the cardholder system according to the invention;
Figure 5 shows an embodiment of magnetic invalidation means according to the invention;
Figure 6 shows an embodiment of chemical/thermal invalidation means according to the invention;
Figure 7(a) and 7(b) shows an embodiment of chemical invalidation means according to the invention;
Figure 8(a), 8(b), 8(c) and 8(d) shows means for invalidation by sealing according to the invention; and
Figure 9 shows a partial block diagram of an embodiment of the cardholder system according to the invention comprising additional means for activating invalidation or destruction of information on a card in the cardholder.

### DETAILED DESCRIPTION OF THE INVENTION

An embodiment of the invention may comprise a cardholder as described in international patent application publication number WO 01/55977 provided with additional functions according to the invention, but it is understood that the present invention is not limited to being implemented in this specific cardholder.

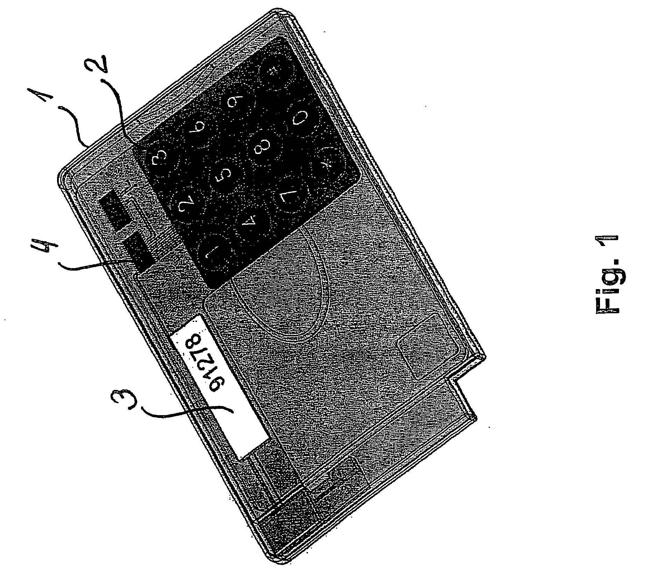

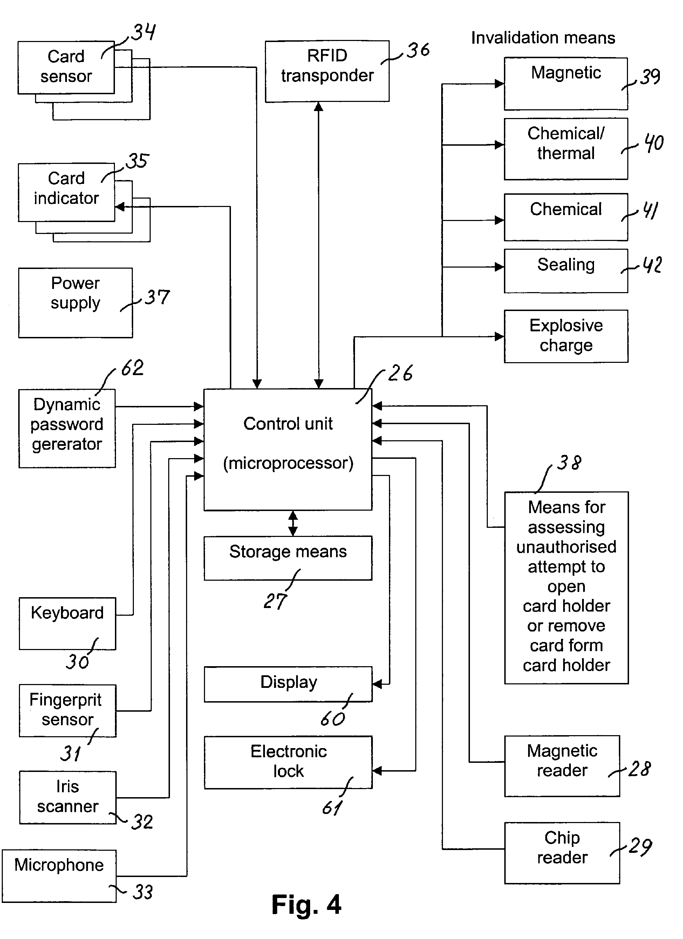

A practical design of a cardholder according to the invention is shown in figure 1 and comprises a housing generally indicated by reference numeral 1 and containing one or more receptacles or compartments for holding payment or credit cards etc., these receptacles not being shown in figure 1. On the face of the housing 1 user interface means are provided for entering information to the cardholder and display means for displaying information. Specifically in the shown embodiment these user interface means comprise a keyboard 2, but it is understood that other kinds of user interface means may be used, such as a touch screen or a fingerprint scanner etc. as mentioned above. The cardholder furthermore comprises a display 3 for displaying for instance the Card Security Code (CSC) upon entry of an acceptable personal identification code (PIN, dedicated cardholder code) on the keyboard or on the acceptance of the fingerprint of the user, in case this facility is incorporated. Furthermore the cardholder 1 is provided with various electronic circuits generally indicated by reference numeral 4 in figure 1 for performing/controlling the functions described in the following. The cardholder system according to the invention will be described in further detail with reference to figure 4.

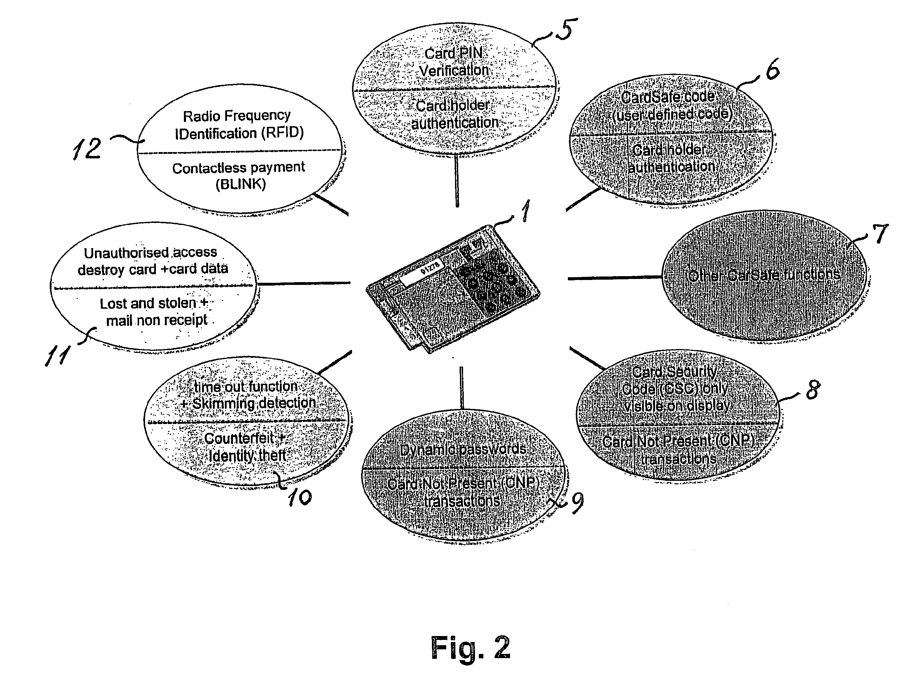

Referring to figure 2 a variety of functions is shown which may be performed by the cardholder system according to one or more embodiments of the present invention. These are referred to by reference numerals 5 through 12 in figure 2 and comprise:

### Cardholder authentication by PIN code verification (ref. numeral 5):

According to this function user authentication for opening the cardholder and removing one or more cards from receptacles in the cardholder or for utilising information present on a card in the cardholder or transferred from storage means on a card to storage/processing means in the cardholder according to the invention to carry out transactions from the cardholder is obtained by entering a specific PIN code on the keyboard of the cardholder and comparing this with the PIN code stored on a card in the cardholder. If the entered and stored PIN codes match the user is authorised to use the card or information provided on the card for transactions. Thus for instance a card may be removed from the cardholder and inserted in a card reader in a conventional manner without invalidation of information of the card. Also the Card Not Present (CNP) function and the contactless payment function described below may only be performed after proper authentication, for instance by the PIN code verification (or alternative verification of a personal cardholder code as described below).

### Cardholder authentication by personal cardholder code (ref. numeral 6):

According to this function authentication for use of a card/information on a card in the cardholder may only be obtained after entering a user defined cardholder code on the keyboard of the cardholder. The functions described with reference to reference numerals 5 and 6 are thus alternatives: the PIN code (relating to the particular card) or the cardholder code (relating to the cardholder itself - not to a specific card).

For instance a user defined cardholder code could consist of a word, which the user for some reason could easily remember, for instance "springtime", whereas the card or cards contained in the cardholder would still be characterised by their traditional PIN code, offering additional protection in connection with traditional card transactions in which the PIN code of the card must be entered on carrying out a transaction.

### Other cardholder functions (ref. numeral 7):

Such functions comprise among other functions authentication by other means than a user entering a numeric (or alphanumeric) code on the keyboard of the cardholder. Among such functions the following are specifically mentioned:
(1) The cardholder according to the invention may be provided with a fingerprint reader or scanner, whereby authentication may be obtained by matching a fingerprint read by the fingerprint reader with a digitised image of a fingerprint stored in the cardholder. According to an embodiment of the invention said fingerprint scanner initially (for instance when the cardholder system is purchased) scans the cardholder's fingerprint with maximum resolution, i.e. with maximum number of pixels and stores this digital image in storage means in the cardholder. The cardholder is furthermore provided with a scroll keyboard and digital encoder; which enables the owner of the cardholder to adjust the sensitivity with which a subsequently scanned fingerprint is recognised and accepted as authentication. For instance values between 20 percent recognition and 100 percent recognition might be possible. Thus the owner of the cardholder chooses the degree of recognition acceptable for subsequent authentication of a transaction and stores this degree of recognition in the cardholder system. It is in practice advantageous that a 100 percent degree of recognition is not chosen, because this would require too high power consumption and it would furthermore often be necessary for the user repeatedly to scan his fingerprint in order to obtain the required 100 percent degree of recognition, which would be time consuming and annoying for the user.
   It would according to the invention be possible to use other means for entering personal authentication data into the cardholder system. Thus for instance an IRIS scanner with corresponding processing means may be used. Furthermore a microphone providing an audio signal to speech recognition means may be used for entering authentication data into the cardholder system.
(2) The cardholder system according to the invention may optionally comprise more than one PIN code/cardholder code.
(3) An additional function in connection with the contactless payment function according to which additional function the cardholder may only be applied to carry out transactions for a limited period of time (a time window), for example during one or two hours a day, where the period of time (starting time, terminating time or length of period or possibly more than one period a day) may be specified by the user.

### Card Not Present (CNP) transactions (ref. numeral 8):

Carrying out a traditional Card Not Present (CNP) transaction such as a purchase via the Internet, a phone or a FAX machine requires use of information present on a card, this information comprising a Card Security Code (CSC) or Card Verification Code (CVC) usually comprising three or four digits visually provided on the card, for instance adjacent to the signature field on the rear face of the card. The visual CSC/CVC may alternatively be removed from the card and stored as digital information on either the magnetic stripe or on the chip on a chip- or smart card. In the latter case this necessary information may no longer be read by a user directly from the card but must be electronically read from the card and displayed by the display means provided on the cardholder according to the invention. According to the invention the CSC/CVC is only displayed on the cardholder after the authentication process has been successfully carried out, and a user may thus not perform a Card Not Present (CNP) transaction without a successful authentication process either requiring knowledge of the PIN code or individual cardholder code or requiring reading of the appropriate individual data from a fingerprint reader etc as described above. Thus also according to the CNP function the individual authentication process becomes the key to the use of a card contained in the cardholder for carrying out transactions.

### Card Not Present (CNP) transactions with dynamic passwords (ref. numeral 9):

Dynamic passcode authentication is another layer of protection that allows a cardholder to participate in a rigorous authentication process using a smart card and a dynamic passcode generator that creates a one-time passcode for each online transaction made by a cardholder. The cardholder system according to the invention is according to a preferred embodiment provided with means for generating a unique numeric one-time password for each transaction. Specifically according to the invention the cardholder system on entering the PIN code or cardholder code or after carrying out the other authentication processes described generates and displays a numeric password to prove the presence of the payment card which will be used instead of the above mentioned CSC to allow carrying out one single transaction. For subsequent transactions this process must be repeated.

### Counterfeit + Identity theft (ref. numeral 10):

The cardholder system according to the invention may be provided with a time-out function warning the owner of the cardholder system if a card has been removed from the cardholder for more than a certain predetermined period of time, for instance three minutes. The cardholder may for instance be provided with means for emitting a sound on termination of this period of time.

The cardholder system according to the invention may furthermore be provided with a skimming detection function offering protection against cloning of a card by the cardholder system providing information to the owner of a card having been swiped (skimmed) more times through a magnetic reader.

### Lost or stolen + mail non receipt (ref. numeral 11):

If a card is removed from the cardholder system according to the invention this will according to a specific embodiment of the present invention leave a visible mark on the card and/or destroying (invalidating) the data stored on the card. Various invalidating means provided in the cardholder according to the invention have already been described in the initially mentioned international patent application publication number WO 01/55977, but others are described in the following in connection with figure 4 through 8.

### Contactless payment (BLINK)(ref. numeral 12):

According to this function the cardholder system according to the invention is able to perform contactless payment transactions by RFID (Radio Frequency Identification) in connection with a BLINK terminal. According to the invention the chip or other electronic unit (transponder) which is currently implemented or embedded in payment cards for contactless payment is instead provided in the cardholder system according to the invention. On inserting a payment card in the cardholder according to the invention the data necessary for carrying out a contactless payment transaction is read by reader means in the cardholder either from the magnetic stripe on the payment card or from a chip on this card. In order subsequently to be able to carry out a contactless payment transaction the appropriate individual authentication process must be carried out and the payment card must be present in the cardholder. When the payment card is removed from the cardholder the above data are deleted from the storage means in the cardholder or in case of unintentional use of the cardholder the data stored herein are destroyed. It is also possible to provide timer means in the cardholder for only allowing contactless payment during certain predetermined periods of time, which periods may be chosen by the owner of the cardholder system. According to the invention existing cards provided with a magnetic stripe or a chip may be "converted" to contactless payment cards because the cardholder system according to the invention has taken over the required RF transmission and hence the "BLINK" function.

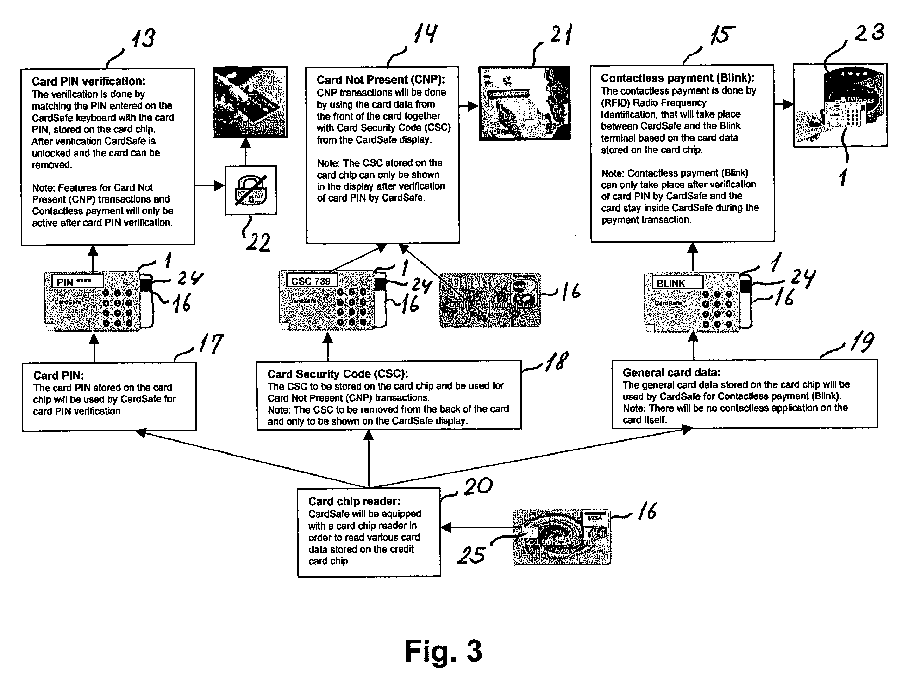

Referring to figure 3 summary of the three main transaction functions of the cardholder system according to the invention is shown: (1) unlocking the cardholder, whereby a card may be removed from the cardholder for instance for insertion of the card in a card reader; (2) Card Not Present (CNP) transactions utilising information displayed on the cardholder; and (3) contactless payment transactions using RFIF-tag means or transponder means present in the cardholder and information transferred from storage means in the card to the cardholder.

On inserting a card 16 into the cardholder, information stored in storage means on the card (magnetic stripe 24 or chip 25) is transferred from these storage means to storage means or processing means provided in the cardholder. Transfer of information from the magnetic stripe 24 on the card to storage means in the cardholder must take place during actual insertion of the card into the cardholder as this transfer requires a relative movement between the magnetic stripe on the card and the reader in the cardholder. Transfer of data from a chip 25 on the card to storage/processing means in the cardholder may take place immediately after insertion of the card or at any other time when the card is present in the cardholder, for instance upon entering the cardholder code as described previously.

As mentioned for instance in connection with figure 2 various types of cardholder codes for providing access either to the physical card(s) in the cardholder or the required information present on these cards are envisaged, for instance a dedicated cardholder code (numeric or alphanumeric code) or the PIN code of a specific card in the cardholder. The latter of these options is used as an example in figure 3, but it is understood that any other authentication code or means (fingerprint scanner for instance) may be used instead.

For traditional transactions (ref. number 1 in figure 3) which require the removal of the card from the cardholder for instance for insertion of the card in a card reader the PIN code stored on the card chip (or magnetic stripe) will be used by the cardholder system according to the invention for verification as indicated at reference numeral 17. The card PIN verification 13 will be made by matching the PIN code entered on the keyboard 30 (see figure 4) on the cardholder with the card PIN code provided from the card. After successful verification the cardholder will be unlocked (ref. numeral 22) and the card may be removed form the cardholder without activating the invalidation means 39, 40, 41, 42 provided in the cardholder system as described further in connection with figure 4 to 8.

For carrying out Card Not Present (CNP) transactions for instance from a PC and via the Internet as shown at reference numeral 21 the user must know the Card Security Code (CSC) or Card Verification Code (CVC) as described previously. As indicated at reference numeral 18 the CSC/CVC is according to the invention not visible on the card but instead stored in the storage means in the card. The CSC/CVC will only be shown on the display 60 after entering the PIN code on the keyboard 30 or performing the alternative verification procedures (fingerprint scanning etc.) as mentioned previously. When the verification procedure has been carried out the card may be removed from the cardholder and the CSC/CVC is displayed on the cardholder display 60. A Card Not Present (CNP) transaction, for instance using the above mentioned dynamic password option, may now be performed using the card data from the front of the card together with the CSC/CVC from the display 60.

For carrying out contactless payment transactions the cardholder according to the invention will be provided with transponder or RFID-tag means enabling the cardholder to function as the RFID-tag required for carrying out such transactions. The data necessary for carrying out this transaction will be transferred from the storage means on the card to storage/processing means in the cardholder and the card itself will according to the invention not be provided with RFID-tag means with the consequence that contactless payment transactions may not be performed directly between the card and a BLINK terminal 23, but only from the cardholder, in which the card is actually present, to the BILNK terminal. According to the invention, as indicated at reference numeral 15, contactless payment may only take place after verification (by PIN code or other verification procedures) has been carried out successfully. In a practical embodiment of the invention the card data used for carrying out the RFID based contactless transaction will only be transferred from the card to the RFID transaction means in the cardholder upon entering the PIN code via the keyboard or upon successful performance of alternative verification procedures.

According to a preferred embodiment of the invention the card accommodated in the cardholder is automatically displaced from the cardholder to facilitate removal of the card from the cardholder upon entry of the correct PIN code or cardholder code.

With reference to figure 4 a schematic functional diagram of the cardholder system according to the present invention is shown. The system comprises a central control unit 26 for instance implemented as a microprocessor and storage means 27 for storing data for instance transferred from storage means (magnetic stripe or chip) on a card in the cardholder. Such data are transferred from the card storage means to the control unit 26 or cardholder storage means 27 by means of a magnetic reader 28 for reading data from a magnetic stripe on a card or by means of a chip reader 29 for reading data from a chip on a chip or smart card. The cardholder according to the invention may comprise both of the reader means or only a single one of these. The cardholder system is furthermore provided with display means 60 for displaying data from the card such as the CSC/CVC of the card. The cardholder system according to the shown embodiment of the invention is furthermore provided with card sensor means 34 for detecting the presence of a card in the cardholder (or more cards in embodiments comprising more than one receptacle for housing a card). Furthermore the cardholder may be provided with card indicator means 35, such as LED's for indication the actual presence of one or more cards in the cardholder.

The cardholder according to the invention is furthermore provided with at least one user interface means for entering authentication data, such as the dedicated cardholder code or PIN code used for providing access to perform the various card transaction procedures (removal of a card from the cardholder, Card Not Present (CNP) transactions, contactless payment transactions) that may be carried out by means of the cardholder system according to the invention. These user interface means may comprise, but may not be limited to, a keyboard 30, which may be a traditional keyboard or implemented as a touch screen, a fingerprint sensor 31, an IRIS scanner or a microphone 33. In the latter case the processing means (microprocessor) of the cardholder system will be provided with suitable speech recognition algorithms necessary to for instance identify an articulated code word. As a further alternative, means for biometric data access, for instance applying nano technology, may be used as an interface means for providing authorisation of card or card data usage.

The cardholder according to the invention will furthermore be provided with an electronic lock 61 for providing physical access to a card in the cardholder once the verification procedure has been successfully carried out.

In order to enable contactless payment transactions to be carried out using the cardholder according to the invention, the cardholder is furthermore provided with transponder or RFID-tag means 36 which may receive the data necessary for completion of such transactions either directly from a chip in a chip or smart card present in the cardholder or from the central storage means 27 to which such data have been transferred from the storage means (magnetic stripe or chip) on the card. In the latter case removal of a card from the cardholder will delete the above data from the central storage means 27 so that a contactless payment transaction may only be performed with the card actually present in the cardholder. Thus placing the cardholder in the vicinity of a BLINK terminal and entering the required cardholder code or PIN code or performing another of the above mentioned verification procedures will enable contactless payment to be carried out from the cardholder system according to the invention.

According to an embodiment of the invention the cardholder system furthermore comprises a dynamic passcode/password generator 62 for providing the dynamic password authentication option described in connection with reference numeral 9 in figure 2.

The cardholder system according to the invention is furthermore provided with invalidation means for destroying the card data in case a card is removed or tried to be removed from the cardholder without successful completion of the verification procedure. The presence of such invalidation means have already been described in the applicant's own prior international patent application publication number WO 01/55977, but a number of further specific invalidation mechanisms are described in the following and form part of the present invention as defined by a number of the appended dependent claims. Disabling of these invalidation means such that a card may be removed from the cardholder without damage to the information on the card is generally dependent on the successful carrying out of the verification procedure (PIN verification, dedicated cardholder code, fingerprint reading etc.) but the cardholder may additionally be provided with means for detecting physical violence on the cardholder (attempt to break open the cardholder for instance). Examples of such means have also previously been described in the above international patent application publication number WO 01/55977. For activating such invalidation means the cardholder system is furthermore provided with means 38 for assessing unauthorised attempt to open the cardholder system or to remove a card from the cardholder system.

In the following alternative invalidation means will be described in some detail, but it is understood that further means may be envisaged. Specifically magnetic 39, chemical/thermal 40, chemical 41 and sealing 42 invalidation means will be described in the following.

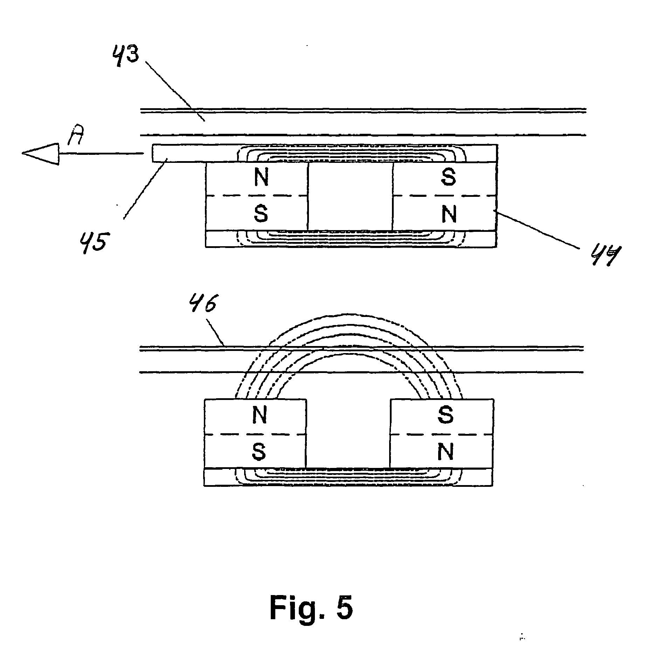

Referring to figure 5 a first embodiment of invalidation means according to the invention is schematically shown comprising magnetic invalidation means that may be used for deleting information from a magnetic stripe on a card but not from a chip in a chip or smart card. Figure 5 shows a cross sectional view through a card 43 provided with a magnetic stripe 46 which in the cardholder is placed above a permanent magnet 44, the magnetic field strength of which will be powerful enough to erase the magnetic information in the stripe 46. Between the magnet 44 and the card 43 a magnetic shield 45 of ferromagnetic material shielding off the magnetic field from the card is inserted. The cardholder according to the invention is according to this embodiment provided with actuator means (not shown) that causes the shield 45 to remain in place between the magnet 44 and the card 43 if the means 38 for assessing unauthorised attempt to remove a card form to cardholder or opening the cardholder shown in figure 4 are not providing an activation signal to the actuator. However, if the means 38 senses unauthorised removal/opening an activating signal will be provided to the actuator, which in turn will displace the shield 45 away from the intermediate gap formed between the card 43 and the magnet 44 and hence lead to erasing the data on the magnetic stripe 46 by the magnetic field from the magnet 44.

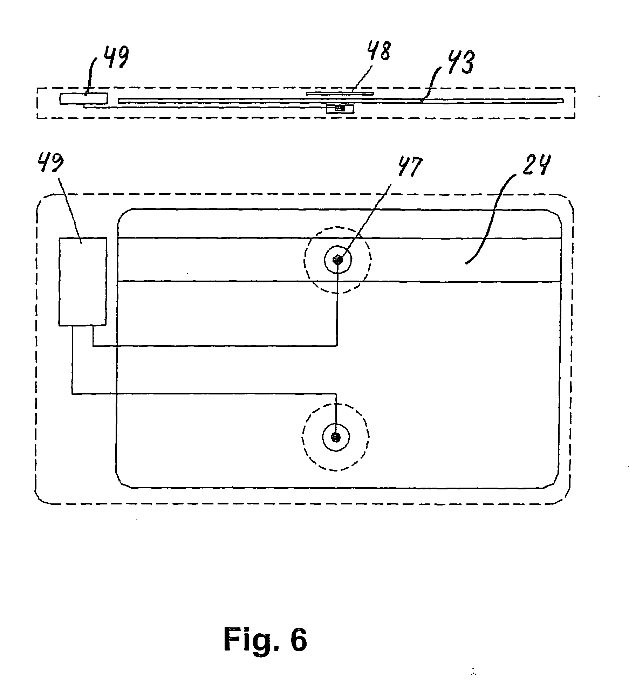

Referring to figure 6 a second embodiment of invalidation means according to the invention is shown, which has the advantage over the one shown in figure 5 in that it may be used to invalidate the data not only on a magnetic stripe but also on a chip in a chip or smart card. According to this invalidation means the appropriate region on the card is exposed to heavy heating on activating the invalidation means. The thermal energy is generated by a chemical charge 47 which is activated by an electrical circuit 49 on reception of an activation signal from the central control unit 26 or assessment means 36. The thermal energy generated by the chemical charge 47 is powerful enough to melt a hole through the card. A metallic disc 48 is provided on the opposite side of the card and prevents excess thermal energy from propagating to the surrounding parts of the cardholder.

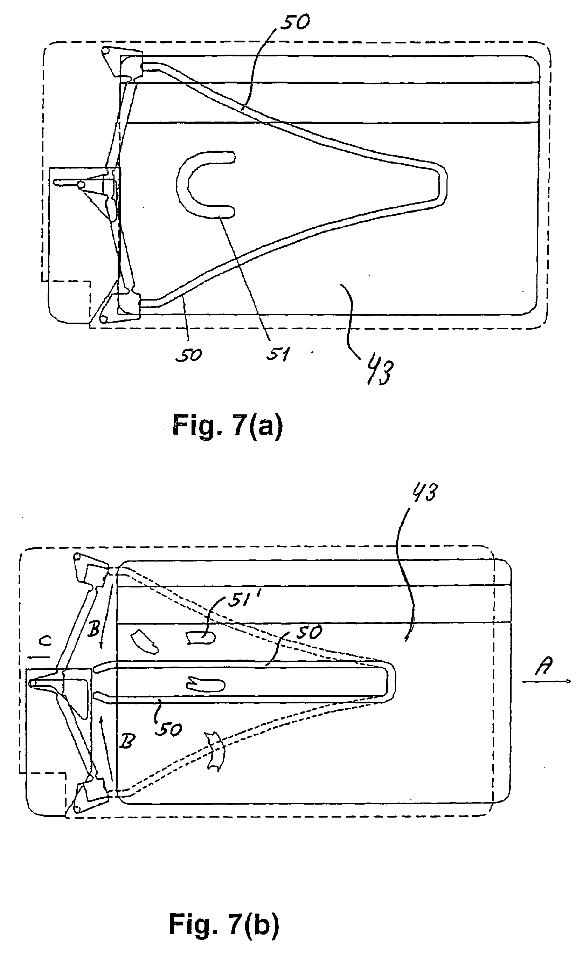

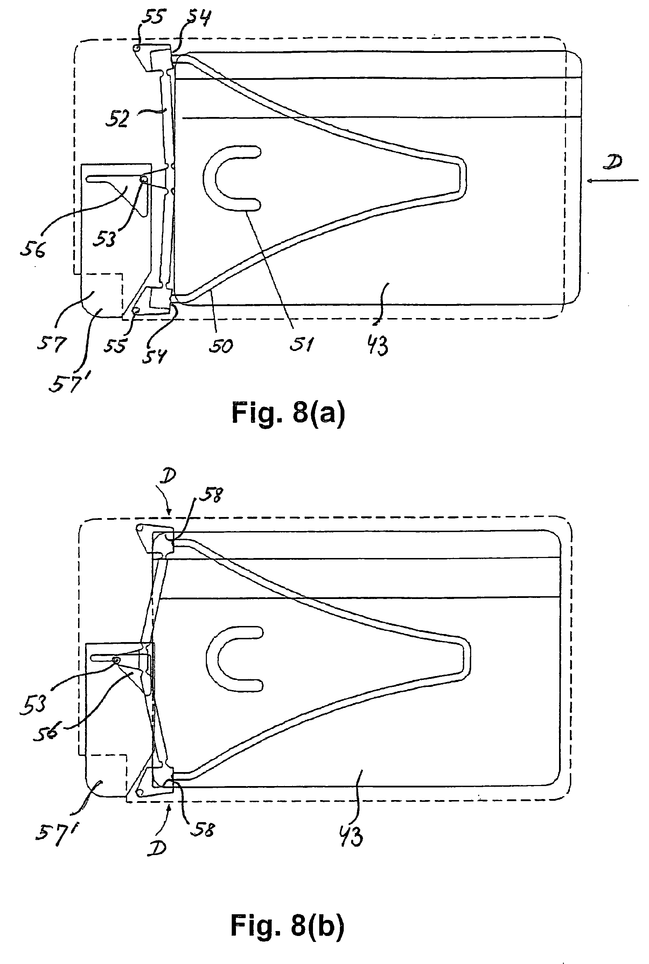

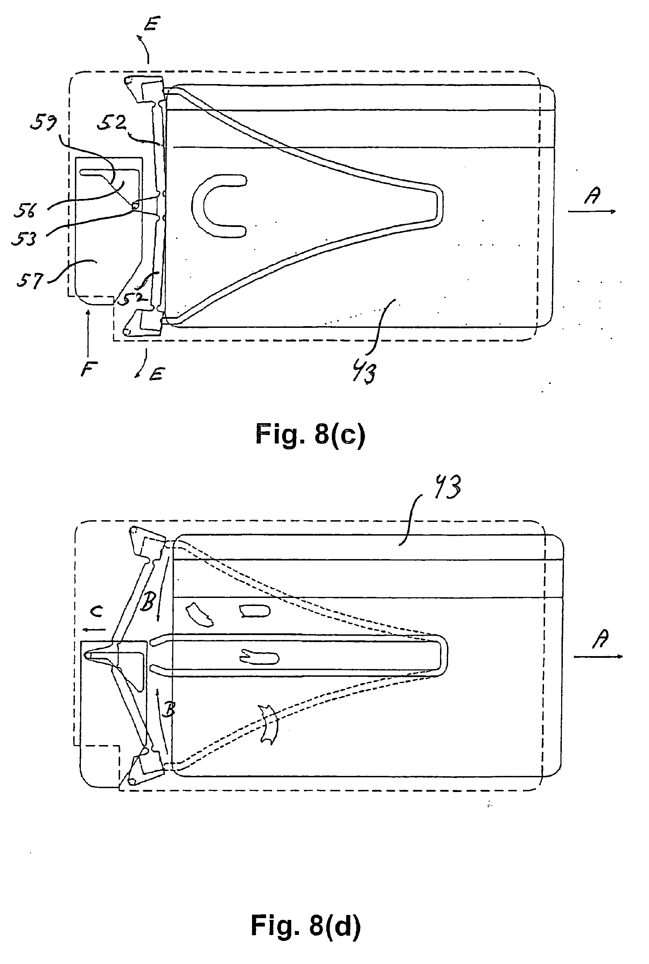

Referring to figure 7(a) and 7(b) a schematic representation of a third embodiment of invalidation means according to the invention is now shown comprising purely chemical invalidation means. A detailed description of the mechanism applied in these invalidation means will be given in connection with the description of figure 8(a) to 8(d). The chemical invalidation means shown in figure 7(a) and 7(b) consists of a powerful V-shaped spring member 50, where a glass container 51 is placed between the legs of the V-shaped spring member. In the deactivated state the spring is in a pre-tensioned open configuration held in this configuration through engagement with locking and releasing members which will be described in more detail in connection with figure 8(a) through 8(d). Unauthorised removal of a card 43 from the cardholder will bring the spring member out of engagement with the locking and retaining members and the legs of the V-shaped spring member will collapse around the glass container 51 and break it (51'), whereby the contents of the glass container 51 will be distributed over the surface of the card 43 and delaminate it. The container is filled with a suitable solvent such as acetone or tetrahydrofurane.

Referring finally to figure 8(a) to 8(d) a fourth embodiment of invalidation means according to the invention is shown. The invalidation means consist of a glass container 51, in this case filled with a quickly hardening glue or other sealing agent which, when distributed over the card fixes this to the cardholder. This embodiment is thus also effective for both magnetic stripe cards and chip or smart cards.

The functioning of the mechanical parts of this and the previous invalidation means shown in figure 7(a) and 7(b) is described in detail in the following referring to figure 8(a), 8(b), 8(c) and 8(d). Thus figure 8(a) and (b) illustrates insertion of a card 43 into the cardholder. The mechanism comprises as mentioned the V-shaped spring member 50 with its leg portions placed on either side of the glass container 51. Adjacent to the distal ends of this spring member and in engagement with it a snap-mechanism 52, 53, 54, 55, 58 is provided and a laterally displaceable tongue member 57, a corner portion 57' of which is accessible from outside the cardholder through an opening in a corner of the cardholder. The snap-mechanism comprises two centrally located arm portions 52 between which a middle section is provided comprising a tap member 53. The tap member 53 is movable within an open region or recess 56 in the tongue member 57. At the opposite ends of the arm members 52 these are connected to locking members 54 mounted for pivotal movement about pivot members 55 attached to the cardholder. When a card is initially inserted into the empty cardholder as indicated by the arrow D in figure 8(a) the arms 52 of the snap-mechanism are initially in a position slightly displaced to the right as seen in figure 8(a). When the card on insertion reaches the arms 52 these will be pressed to the left as shown in figure 8(b) and the card will simultaneously be displaced into the retainment portions 58 on the locking members 54, whereby the card will be retained in this position in the cardholder. The arms 52 of the snap-mechanism will assume the position indicated in figure 8(b), i.e. slightly displaced to the left and with the tap member 53 displaced in the opening 56 in the tongue member 57 as shown. The distal ends of the two leg portions of the V-shaped spring member 50 will be in engagement with a corresponding portion of the locking member 54.

Figure 8(c) now illustrates authorised removal of the card from the cardholder, whereas figure 8(d) illustrates unauthorised removal of the card from the cardholder.

Referring to figure 8(c) the card 43 may be removed undamaged from the cardholder provided the tongue member 57 is laterally displaced into the cardholder as indicated by arrow F in figure 8(c) due to the fact that the tap member 53 on laterally displacing the tongue member 57 into the cardholder will be forced to move along the inclined portion 59 of the opening in the tongue member 57, thereby urging the arm portions 52 of the snap-mechanism to the right into its initial stable state assumed in figure 8(a). In this state the leg portions of the spring will still be in engagement with the locking members 54 thus preventing collapse of the spring member.

However, if the card 43 is attempted removed from the cardholder without the lateral displacement of the tongue member 57 into the cardholder as described above the arm portions 52 of the snap-mechanism will not be forced to the stable position to the right as shown in figure 8(c) but may instead move to the left as shown in figure 8(d), whereby the distal ends of the leg portions of the spring member will loose engagement with the locking members 54, this leading to a collapse of the spring member 50 and breakage of the container 51 as shown in figure 8(d).

According to the invention the above described lateral displacement of the tongue member 57 may be controlled by the control unit of the cardholder system through the provision of appropriate actuator means for controlling the movement of the tongue member. Thus on successful termination of the individual verification process described previously these actuator means may receive a signal to the effect that the actuator either itself causes the lateral displacement of the tongue member 57 required to remove a card from the cardholder without damage, or the actuator may lock the tongue member 57 in the extended position assumed in figure 8(a), 8(b) or 8(d).

Furthermore according to a specific embodiment of the invention the invalidation means provided in the cardholder may comprise an explosive charge, which upon activation may either destroy the card or data on the card or leave a visible mark on the card. Alternatively the discharge of the explosive charge may activate other invalidation processes in the cardholder, for instance magnetic destruction of information on a magnetic stripe, breakage of a container (for instance a glass phial) filled with pigment or an adhesive for marking the card or attaching it to (portions of) the cardholder. In this manner an electronically activated mechanic, chemical or thermal invalidation of data or destruction of the card may be attained according to the invention.

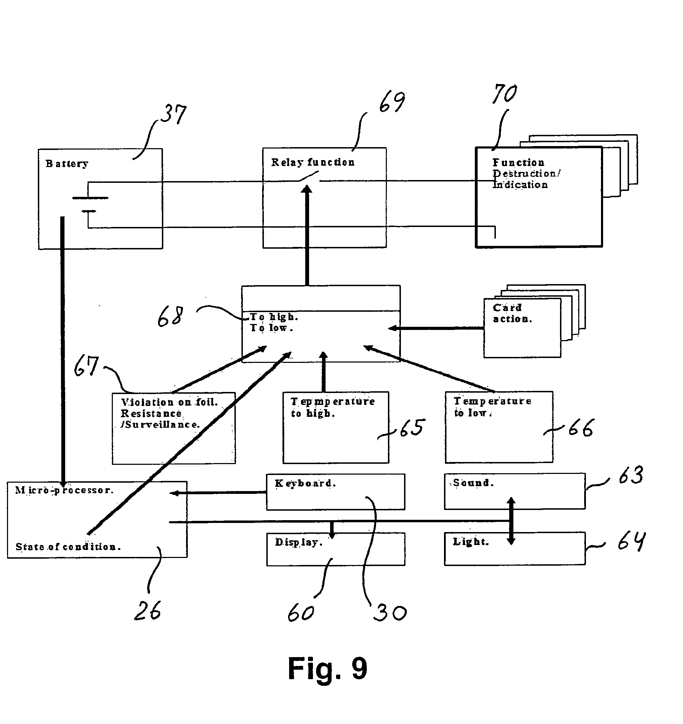

Referring to figure 9 a partial block diagram of an embodiment of the cardholder system according to the invention is shown comprising additional means for activating invalidation or destruction of information on a card in the cardholder. The cardholder comprises the central control unit / microprocessor 26 communicating with the keyboard 30 and the display 60 (as also shown in figure 4). Furthermore the cardholder may for instance be provided with means 63 for emitting a sound and/or means for emitting a light signal as described previously on page 12. Such light or sound signals could also be activated if the cardholder is tried opened without authorisation for instance by attempting to break the cardholder. To accomplish this appropriate portions of the cardholder may for instance be provided with resistive foils as described in international patent application publication number WO 01/55977, in figure 9 indicated by reference numeral 67. The cardholder may furthermore be provided with temperature sensor means 65, 66 and determining means 68 activating invalidation or destruction functions 70 of the card data or card for instance if the cardholder is subjected to high or low temperatures as a means of unauthorised opening of the cardholder. Also attempt to remove the keyboard, display or other externally accessible parts of the cardholder may according to the invention activate the destruction/invalidation functions 70.

The cardholder system according to the invention may furthermore be provided with a battery indicator, for instance giving a warning to the user when the battery is almost discharged.

The battery may for instance be recharged wireless or via a set of contacts on the cardholder.

Furthermore, when an electronic card is inserted into the cardholder according to a specific embodiment of the invention, existing information is deleted from the card so that a card removed from the cardholder will not be able to be read electronically, although the card may not have been physically destroyed by the invalidation means.

## Claims

1. Cardholder system comprising
(a) a cardholder (1) comprising at least one receptacle for receiving and holding cards;
(b) user interface means (2, 30, 31, 32, 33) for entering personal identification data into the cardholder;
(c) means (27) for storing personal identification data in the cardholder;
(d) means (26) for comparing said entered personal identification data with the personal identification data stored in the cardholder;
(e) means (61) for providing access to a card in the cardholder if said entered and stored personal identification are similar;
**characterised in that** the cardholder furthermore comprises
(f) means (28, 29) for reading information present on a card on insertion of the card into the cardholder or when the card is present in the cardholder.

2. Cardholder system according to claim 1, **characterised by** furthermore comprising storage means for storing said information provided from the card, and display means (60) visibly provided on the cardholder for displaying at least a portion of said information.

3. Cardholder system according to claim 1 or 2, **characterised in that** said information is the Card Security Code (CSC) or Card Verification Code (CVC).

4. Cardholder according to claim 1, 2 or 3, **characterised in that** said information is only displayed on the cardholder display (60) when said entered and stored personal identification data are similar.

5. Cardholder system according to claim 1, **characterised in that** the cardholder is furthermore provided with RFID-tag or transponder means (36) for carrying out contactless payment transactions, said means (36) receiving data from said storage means (27) in the cardholder of from storage means on a card present in the cardholder.

6. Cardholder system according to claim 1, **characterised in that** said user interface means is a keyboard or touch screen for entering numeric or alphanumeric personal identification data into the cardholder system.

7. Cardholder system according to claim 1, **characterised in that** said user interface means is a fingerprint scanner or reader (31).

8. Cardholder system according to claim 1, **characterised in that** said user interface means is an IRIS scanner (32) or a microphone (33).

9. Cardholder system according to claim 7, **characterised in that** the cardholder is provided with means for setting the recognition level at which the data entered via the fingerprint scanner (31) are accepted in a verification process.

10. Cardholder system according to claim 1, **characterised in that** the cardholder is provided with means (26) for allowing contactless payment transactions only during one or more predetermined periods of time.

11. Cardholder system according to claim 1, where the cardholder is furthermore provided with invalidation means for invalidating data on a card in the cardholder in case a card is removed from the cardholder without authorisation or in case it is attempted to open the cardholder without authorisation, **characterised in that** said invalidation means are physical means such as one or more belonging to the group of magnetic means (39), chemical/thermal means (40), chemical means (41) and card sealing means (42).

12. Cardholder system according to claim 11, where said invalidation means are activated upon deformation of breakage of the cardholder or upon subjecting the cardholder to temperatures outside a certain, acceptable temperature range.

13. Cardholder system according to claim 11 or 12, where the cardholder is provided with an explosive charge which either upon activation invalidates information on the card, provides a visible mark on the card or destroys the card or activates any of the invalidation means according to claim 11.

14. A method for preventing card fraud, said method comprising placement of an electronic card (credit card etc.) provided with information storage means (magnetic stripe, chip) in a cardholder provided with means (28, 29) for reading information stored on said storage means on the card, said method comprising the following steps:
(a) entering a personal identification code or data (PIN code, dedicated cardholder code, fingerprint data, etc.) into said cardholder;
(b) the cardholder on reception of said personal identification code or data after comparison with similar data stored in the cardholder displaying a Card Security Code or Card Verification Code (CSC, CVC) and unlocking the cardholder, such that at least one card may be removed from the cardholder; and
(c) either performing a transaction by means of the card itself (for instance by insertion of the card in a card reader) or performing a Card Not Present (CNP) transaction using data obtainable from the card itself together with said Card Security Code or Card Verification Code (CSC, CVC).

15. A method for preventing card fraud, said method comprising placement of an electronic card (credit card etc.) provided with information storage means (magnetic stripe, chip) in a cardholder provided with means (28, 29) for reading information stored on said storage means on the card and RFID-tag or transponder means (36), said method comprising the following steps:
(a) entering a personal identification code or data (PIN code, dedicated cardholder code, fingerprint data, etc.) into said cardholder;
(b) upon acceptance of said personal identification code transfer of card data from said storage means in the card contained in the cardholder or from said storage means (27) in the cardholder to radio frequency identification (RFID) responding means (RFID-tag, transponder) provided in the cardholder; and
(c) without removing said card from the cardholder performing a contactless payment (BLINK) using the cardholder.

16. A method according to claim 15, **characterised in that** said contactless payment transaction may only be performed during one or more predetermined periods of time.
